# EUROPEAN PATENT SPECIFICATION

(11) **EP 4 085 766 B1**
(45) Date of publication and mention of the grant of the patent: **16.09.2026**
(21) Application number: 22171212.8
(22) Date of filing: 02.05.2022
(51) Int. Cl.: A01N 25/30, A01N 47/34, A01P 13/00, A01N 37/10

(54) **USE OF 1,2-ALKANEDIOLS AS ADJUVANT IN AGRICULTURE**
VERWENDUNG VON 1,2-ALKANDIOLEN ALS ADJUVANS IN DER LANDWIRTSCHAFT
UTILISATION DE 1,2-ALCANEDIOLS EN TANT QU'ADJUVANTS DANS L'AGRICULTURE

(30) Priority: 03.05.2021 BE 202105355
(43) Date of publication of application: 09.11.2022
(73) Proprietor: Minagro Srl, 1348 Louvain-la-Neuve (BE)
(72) Inventor: VAN DER SANDE, Karen, 1348 Louvain-la-Neuve (BE); DE MAERE, Arnold, 1348 Louvain-la-Neuve (BE); PEULENS, Emmanuel, 1348 Louvain-la-Neuve (BE)
(74) Representative: Brantsandpatents bv

(56) References cited:
- EP-A1- 3 824 733
- CN-A- 104 546 522
- CN-A- 110 638 707
- US-A- 4 557 751
- US-A1- 2010 324 152
- US-A1- 2012 046 167
- SONG UHRAM ET AL: "Assessment of the potential risk of 1,2-hexanediol using phytotoxicity and cytotoxicity testing", ECOTOXICOLOGY AND ENVIRONMENTAL SAFETY, ACADEMIC PRESS, SAN DIEGO, CA, US, vol. 201, 3 June 2020 (2020-06-03), XP086207030, ISSN: 0147-6513, [retrieved on 20200603], DOI: 10.1016/J.ECOENV.2020.110796
- ELOISE C TREDENICK ET AL: "Mathematical Modelling of Hydrophilic Ionic Fertiliser Diffusion in Plant Cuticles: Lipophilic Surfactant Effects", ARXIV.ORG, CORNELL UNIVERSITY LIBRARY, 201 OLIN LIBRARY CORNELL UNIVERSITY ITHACA, NY 14853, 18 April 2019 (2019-04-18), XP081387537, DOI: 10.3390/PLANTS8070202

## Description

### FI ELD OF THE INVENTION

The present invention relates to the use of C5 to C12 1,2-alkanediols as adjuvant in agricultural liquid compositions. In particular, the present invention relates to the use of C5 to C12 1,2-alkanediols as wetting agent, spreading agent or penetration enhancer for agricultural active ingredients.

### BACKGROUND

Pesticides such as insecticides, fungicides, herbicides are important in agriculture to protect the crops and ornamentals from pests and consequently to increase yields. Formulated pesticide active ingredients as well as biostimulant and micronutrient products require in general adjuvants, commonly surface-active components to improve or increase their biological activity or effectiveness once applied to plants or soil.

When sprayed on the hydrophobic leaf surface the use of adjuvants could enhance wetting and spreading of the droplets, improve spray retention and change the drying pattern of the droplet. The use of adjuvants can increase the penetration of the biocide or active component through the plant cuticles and change the translocation through the plant, could alter the volatility of the spray mixture or reduce leaching of the active ingredients through the soil profile. The interactions between the adjuvants and the active ingredients, either biocides, fertilisers or biostimulants and their efficacy once applied on the target are very complex processes and will depend on many factors such as the chemistry of the adjuvant and the active component, the surface of the target, environmental conditions, application rates and spray conditions.

To enhance active ingredient uptake, a combination of various classes of wetting and spreading agents or stickers known in the art can be applied. One class of adjuvants that is frequently used are surfactants, typically non-ionic, anionic or polymeric, which could also be providing emulsification or dispersion of the concentrated agrochemical formulation. Other classes of products providing adjuvancy could be vegetable oils and their methyl esters, paraffinic oils, solvents, polymers and other inert formulation ingredients.

Various types of adjuvants useful as components of formulations in agriculture are known. Many commonly used adjuvants can however have unfavourable toxicity / ecotoxicity profiles and are non-biodegradable. Accordingly, there is a need for more environmentally friendly adjuvants that would be equally effective in enhancing agrochemical activity.

WO 2003/069994 discloses the use of a mixture of two, three or more unbranched 1,2-alkanediols as antimicrobial agent. As a further mixture component, an antimicrobial agent can be used in an amount, wherein the antimicrobial effect of the alkanediol mixture is synergistically enhanced.

WO 2010/124973 discloses the use of unbranched 1, 2-alkanediol having 5 to 10 carbon atoms for use in compositions comprising pesticide and preservative. The alkanediol is used to increase the bactericidal effect of the preservative. Preferably, the composition additionally contains a formulation aid. US 4 557 751 A describes penetration enhancing surfactants for foliar applications based on ethoxylated unsaturated fatty acids, amines or amides.

### SUMMARY OF THE I NVENTI ON

The present invention and embodiments thereof serve to provide a solution to one or more of above-mentioned disadvantages. To this end, the present invention relates to a use according to claim 1.

Preferred embodiments of the device are shown in any of the claims 2 to 9.

Specific referred embodiments relate to an invention according to claims 2, 3 and 4.

The inventors have surprisingly found that C5 to C12 1,2-alkanediols can be utilized as wetting agent, spreading agent and penetration enhancer in agriculture. Furthermore, C5 to C12 1,2-alkanediols show these properties at low concentrations, under the toxicity and ecotoxicity level.

### DETAI LED DESCRIPTION OF THE INVENTION

The present invention concerns the use of a liquid composition comprising a C5 to C12 1,2-alkanediol as an adjuvant in agricultural, preferably agronomical compositions. In particular, the present invention concerns the use of C5 to C12 1,2-alkanediols as wetting agent, spreading agent and penetration enhancer. The mention in the present specification of a composition according to the present invention is to be understood as a composition to be used according to the present invention.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation. Whereas the terms "one or more" or "at least one", such as one or more or at least one member(s) of a group of members, is clear *per se,* by means of further exemplification, the term encompasses *inter alia* a reference to any one of said members, or to any two or more of said members, such as, *e.g*., any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

The term "agricultural active ingredient", "agronomical active ingredient" and "active ingredient" denotes at least one active substance selected from the group of pesticides, fertilizers, bioeffectors and plant growth regulators.

The term pesticide (hereinafter also referred to as pesticide) denotes at least one active substance selected from the group of fungicides, insecticides, nematicides, herbicides, rodenticides, algicides, molluscicides and miticides.

The term "fertilizers" denotes any material or compound of natural or synthetic origin that is applied to soil or to plant tissues to supply said plant nutrients thereto. The term includes macronutrients as well as micronutrients.

The term "bioeffectors" denotes any viable microorganism or active natural compound which directly or indirectly affects plant performance. Bioeffectors include biofertilizers that improve plant nutrient acquisition and / or uptake, bio-control agents that protect plants from pathogens and pests, bio-stimulants that stimulate plant growth and other compounds that improve cropping efficiency.

"Agronomical composition" as defined herein refers to a composition applied to plants and / or their soil. Generally agronomical compositions are used to improve crop yields, improve resistance to pests, improve nutritional value and the like. In a first aspect, the invention relates to the use of a liquid composition comprising a C5-C12 1,2-alkanediol as an adjuvant in an agricultural composition, preferably an agronomical composition.

C5-C12 1,2-alkanediols are biodegradable and show low toxicity at sufficiently low concentrations.

Higher molecular weight C5-C12 1,2 alkanediols are not liquid at high concentrations. For example, 1,2-octanediol of more than 97 wt.-% content is a waxy solid at ambient temperature with a melting range of 28-33 °C. The substance frequently forms an undercooled melt that remains stable as a liquid below its melting point for an unpredictable period of time. Therefore, 1,2 octanediol is typically molten before its use by heating to temperatures ranging from 30°C to about 100°C. This mandatory melting process correlates with a variety of drawbacks:
- The heating process consumes energy and requires suitable heating equipment, such as large ovens, which increases the cost of handling.
- The melting process can take several hours or even days, depending on the chosen temperature and the amount of substance to be molten. Slow or incomplete melting is frequently observed, which 5 bears the occasional necessity for repeated or elongated heating and consequently reduces productivity.
- Incomplete melting of the solid may lead to dosage errors due to residual material remaining inside the packaging item.
- The handling of the hot product bears health and safety risks, such as burning of the skin or the inhalation of irritant vapor.
- The solidified melt of 1,2-octanediol has a higher volume than its liquid form. This characteristic may lead to the distortion or damage of packaging items.
- Solidified 1,2-octanediol may finally block non-heated parts of the processing equipment, such as pipes, hoses and valves. This circumstance may lead to expensive errors and downtimes. Liquid compositions comprising a C5-C12 1,2-alkanediol can advantageously be applied and mixed easily.

For these reasons, the use of a liquid composition comprising C5-C12 1,2-alkanediols is preferred.

The term "adjuvant" denotes the use of a compound to increase the efficacy or potency of the active ingredients in the agricultural, preferably agronomical composition. It does not relate to the use of these compounds, in this case 1,2-alkanediols, as active ingredients directly. That is to say, the present invention does not relate to the use of 1,2-alkanediols as antimicrobial or biocidal agent. It is further noted that the concentrations and application rates in which adjuvants in general, and 1,2-alkanediols according to the present invention in particular, are utilized are lower than those generally employed for active ingredients, i.e. for use as antimicrobial or biocidal active ingredient.

In a preferred embodiment, the invention relates to the use of a liquid composition comprising a C5-C12 1,2-alkanediol as a wetting agent. In another preferred embodiment, the invention relates to the use of a liquid composition comprising a C5-C12 1,2-alkanediol as a spreading agent. In another preferred embodiment, the invention relates to the use of a liquid composition comprising a C5-C12 1,2-alkanediol as a penetration enhancer, improving uptake of an agricultural active ingredient, in particular through plant foliage. C5 to C12 1,2-alkanediols have shown unexpectedly good performance in terms of penetration, wetting and spreading characteristics. Advantageously, C5 to C12 1,2-alkanediols significantly improved the wetting and spreading of droplets applied to hydrophobic foliage. Additionally, C5 to C12 1,2-alkanediols showed improved penetration and adsorption of active ingredients.

In a preferred embodiment, the agricultural composition comprises said C5 to C12 1,2-alkanediols in a concentration of at least 0.01 wt.%, more preferably the agricultural composition comprises said C5 to C12 1,2-alkanediols in a concentration of at least 0.02 wt.%, more preferably the agricultural composition comprises said C5 to C12 1,2-alkanediols in a concentration of at least 0.05 wt.%, more preferably the agricultural composition comprises said C5 to C12 1,2-alkanediols in a concentration of at least 0.10 wt.% , more preferably the agricultural composition comprises said C5 to C12 1,2-alkanediols in a concentration of at least 0.15 wt.% , more preferably the agricultural composition comprises said C5 to C12 1,2-alkanediols in a concentration of at least 0.20 wt.%. Lower concentrations are not sufficiently effective to obtain the desired effect. However, in combination with other adjuvants, particularly surface-active products, low concentrations may be utilized.

The agricultural composition comprises said C5 to C12 1,2-alkanediols in a concentration of at most 0.95 wt.%, more preferably the agricultural composition comprises said C5 to C12 1,2-alkanediols in a concentration of at most 0.90 wt.%, more preferably the agricultural composition comprises said C5 to C12 1,2-alkanediols in a concentration of at most 0.85 wt.%, more preferably the agricultural composition comprises said C5 to C12 1,2-alkanediols in a concentration of at most 0.80 wt.%, more preferably the agricultural composition comprises said C5 to C12 1,2-alkanediols in a concentration of at most 0.75 wt.%, more preferably the agricultural composition comprises said C5 to C12 1,2-alkanediols in a concentration of at most 0.70 wt.%, more preferably the agricultural composition comprises said C5 to C12 1,2-alkanediols in a concentration of at most 0.65 wt.%, more preferably the agricultural composition comprises said C5 to C12 1,2-alkanediols in a concentration of at most 0.60 wt.%, more preferably the agricultural composition comprises said C5 to C12 1,2-alkanediols in a concentration of at most 0.55 wt.%, most preferably the agricultural composition comprises said C5 to C12 1,2-alkanediols in a concentration of at most 0.50 wt.%.When 1,2-alkanediols are used for their antimicrobial properties, higher concentrations are generally employed. However, the inventors have found that higher concentrations can lead to the occurrence of phytotoxicity and thus higher concentrations are not desirable for use on crops and plants. Phytotoxicity is not unusual when adding adjuvants to formulations used for treating plants. Plant damage could be caused by either the adjuvant itself or by the active ingredient. An increase in uptake of active ingredient when used in conjunction with the adjuvant could result in a too high concentration of the active ingredient in the plant. The adjuvant itself could also, related to its chemical structure, cause damage when used at too high concentrations. The inventors found that 1,2-alkanediols with a longer carbon chain and higher molecular weight give rise to more phytotoxicity.

In a preferred embodiment of the present invention, the C5-C12 1,2-alkanediols are unbranched. More preferably, the C5-C12 1,2-alkanediols are chosen from the list of 1,2-pentanediol, 1,2-hexanediol, 1,2-octanediol and 1,2-decanediol, more preferably 1,2-hexanediol and 1,2-octanediol. Particular preference is 1,2-octanediol. 1,2-octanediol showed superior wetting ability, spreading ability and penetration enhancement at sufficiently low concentrations to avoid phytotoxicity compared to 1,2-pentanediol. In another preferred embodiment, the present invention relates to the use of a mixture of C5-C12 1,2-alkanediols, preferably a mixture of 1,2-hexanediol and 1,2-octanediol.

The agricultural compositions according to the invention are in a form customary for agrochemical application, particularly compositions for dilution in water such as water-soluble concentrates (SL, LS), dispersible concentrates (DC), emulsifiable concentrates (EC), emulsions (EW, EO, ES), suspensions (SC, OD, FS), and Gels (GF).

A schematic example clarifying each of these embodiments of compositions for dilution in water as known in the art:
i) Water-soluble concentrates (SL, LS). Preferably 10 parts by weight of the active compounds are dissolved with 90 parts by weight of water or a water-soluble solvent. When diluted in water, the active ingredient dissolves. This gives a composition with 10 wt.-% active ingredient content.
ii) Dispersible Concentrates (DC): 20 parts by weight of the active compounds are dissolved in 70 parts by weight of cyclohexanone with the addition of 10 parts by weight of a dispersant, for example dissolved polyvinylpyrrolidone. Dilution in water gives a dispersion. The active ingredient content is 20% by weight.
iii) Emulsifiable Concentrates (EC): 15 parts by weight of the active compounds are dissolved in 75 parts by weight of xylene with the addition of calcium dodecylbenzenesulfonate and castor oil ethoxylate (in each case 5 parts by weight). Dilution in water results in an emulsion. The composition has 15% by weight of active ingredient content.
iv) emulsions (EW, EO, ES): 25 parts by weight of the active compounds are dissolved in 35 parts by weight of xylene with addition of calcium dodecylbenzenesulfonate and castor oil ethoxylate (in each case 5 Parts by weight). This mixture is added by means of an emulsifying machine in 30 parts by weight of water and brought to a homogeneous emulsion. Dilution in water results in an emulsion. The composition has an active ingredient content of 25 wt.-%.
v) Suspensions (SC, OD, FS): 20 parts by weight of the active ingredients are mixed with the addition of 10 parts by weight dispersing and wetting agents and 70 parts by weight of water or an organic solvent in a stirred ball mill to a fine Crushed active ingredient suspension. Dilution in water results in a stable suspension of the active ingredient. The active ingredient content in the composition is 20% by weight.
viii) Gels (GF): In a ball mill, 20 parts by weight of the active ingredients, 10 parts by weight of dispersant, 1 part by weight of swelling agent ("gelling agent") and 70 parts by weight of water or an organic solvent are added mull a fine suspension. Dilution with water results in a stable suspension with 20% by weight active ingredient content.

In a preferred embodiment, the agricultural compositions are liquid compositions, such as water-soluble concentrates, emulsions or suspensions, which comprise at least 10% by weight, preferably 20% by weight, particularly preferably at least 40% by weight, of water. In a further preferred embodiment, solid compositions, such as baits, granules or gels, are preferred which comprise at least 1% by weight, preferably at least 3% by weight, particularly preferably at least 5% by weight of water. The composition of the invention is usually diluted before use to produce the so-called tank mix. Preferably, water is used. The diluted composition is usually applied by spraying or atomizing.

The present invention requires foliar application of the agricultural composition. Foliar application is advantageous as the present invention provides for good wettability of foliage, high spreadabillity on said foliage and high penetration into said foliage.

In another embodiment of the present invention, a liquid composition comprising a C5-C12 1,2-alkanediol is added to the tank mix as adjuvant. Wetting agents, adjuvants, herbicides, bactericides, fungicides are often added immediately before use to the tank mix oils of various types.

In a preferred embodiment, depending on the nature of the desired effect and the active ingredients, the agricultural composition is applied in an amount of 1 to 1 000 kg per ha, preferably in an amount of 10 to 800 kg/ha, more preferably 50 to 500 kg/ha.

In another preferred embodiment, depending on the nature of the desired effect and the active ingredients, the application rates in agriculture are between 0.0001 and 10.00 kg of said C5-C12 1,2-alkanediol per ha, preferably between 0.0001 and 5.00 kg of said C5-C12 1,2-alkanediol per ha, more preferably between 0.001 and 5.00 kg of said C5-C12 1,2-alkanediol per ha, more preferably said C5 to C12 1,2-alkanediol is applied in an amount of 0.01 to 10.00 kg/ha, preferably in an amount of 0.05 to 8.00 kg, more preferably in an amount of 0.1 to 5 kg/ha, more preferably in an amount of 0.1 to 3.0 kg/ha, most preferably in an amount of 0.1 to 1 kg/ha. All amounts refer to the total amount of C5 to C12 1,2-alkanediols applied per ha. The applicant notes that higher application rates are not desirable due to phytotoxicity. Lower application rates do not achieve the desired results.

In a preferred embodiment, said agricultural active ingredient is chosen from the list of: pesticides, fertilizers, biostimulants and plant growth regulators.

Suitable insecticides are insecticides of the carbamate class, organophosphates, organochlorine insecticides, phenylpyrazoles, pyrethroids, neonicotinoids, spinosines, avermectins, milbemycins, juvenile hormone analogs, alkylhalides, organotin compounds, nereistoxin analogs, benzoylureas, diacylhydrazines, METI acaricides, and insecticides such as chloropicrin , Pymetrozine, flonicamide, clofentezine, hexythiazox, etoxazole, diafenthiuron, propargite, tetradifon, chlorfenapyr, DNOC, buprofezin, cyromazine, amitraz, hydramethylnone, acequinocyl, fluacrypyrim, rotenone, or their derivatives.

Suitable fungicides are fungicides of the classes dinitroanilines, allylamines, anilinopyrimidines, antibiotics, aromatic hydrocarbons, benzenesulfonamides, benzimidazoles, benzisothiazoles, benzophenones, benzothiadiazoles, benzotriazines, benzylcarbamates, carbamates, carboxamides, carboxylic acid amides, chloronitriles, cyanoacetamide oximes, cyanoimidazoles, cyclopropanecarboxamides, dicarboximides, dihydrodioxazines, dinitrophenylcrotonates , Dithiocarbamates, dithiolanes, ethylphosphonates, ethylaminothiazolecarboxamides, guanidines, hydroxy (2-amino) pyrimidines, hydroxyanilides, imidazoles, imidazolinones, inorganics, isobenzofuranones, methoxyacrylates, methoxycarbamates, morpholines, N-phenylcarbamates, oxazolidinediones, oximinoacetates, oximinoacetamides, peptidylpyrimidine nucleosides, phenylacetamides , Phenylamides, phenylpyrroles, phenylureas, phosphonates, phosphorothiolates, phthalamic acids, phthalimides, piperazines, piperidines, propionamides, pyridazinones, pyridines, pyridinylmethylbenzamides, pyrimidineamines, pyrimidines, pyrimidinonehydrazones, pyrroloquinolinones, quinazolinones, quinolines, quinones, sulfamides, sulfamoyltriazoles, thiazolecarboxamides, thiocarbamates, thiophanates, thiophenecarboxamides, toluamides, triphenyltin compounds, triazines, triazoles.

Suitable herbicides are herbicides of the classes of acetamides, amides, aryloxyphenoxypropionates, benzamides, benzofuran, benzoic acids, benzothiadiazinones, bipyridylium, carbamates, chloroacetamides, chlorocarboxylic acids, cyclohexanediones, dinitroanilines, dinitrophenol, diphenyl ethers, glycines, imidazolinones, isoxazoles, isoxazolidinones, nitriles, N-phenylphthalimides , Oxadiazoles, oxazolidinediones, oxyacetamides, phenoxycarboxylic acids, phenylcarbamates, phenylpyrazoles, phenylpyrazolines, phenylpyridazines, phosphinic acids, phosphoroamidates, phosphorodithioates, phthalamates, pyrazoles, pyridazinones, pyridines, pyridinecarboxylic acids, pyridinecarboxamides, pyrimidinediones, pyrimidinyl (thio) benzoates, quinolinecarboxylic acids, semicarbazones, sulfonylaminocarbonyltriazolinones, sulfonylureas , Tetrazolinones, thiadiazoles, thiocarbamates, triazines, triazinones, triazoles, triazolinones, triazolocarboxamides, triazolopyrimidines, triketones, uracils, ureas. Suitable classes of rodenticides include anticoagulants, inorganic rodenticides, organochlorine rodenticides, organophosphorus rodenticides, pyrimidineamine rodenticides, thiourea rodenticides, urea rodenticides.

The composition according to the invention usually contains formulation auxiliaries, wherein the choice of auxiliaries usually depends on the specific application form or the active substance. Examples of suitable auxiliaries are solvents, solid carriers, additional and preferably synergistic surface-active substances (such as surfactants, solubilizers, protective colloids, wetting agents and adhesives), organic and inorganic thickeners, antifreeze agents, defoamers, if appropriate dyes and adhesives (eg for seed treatment), or bait materials and attractants (eg for baits).

As surface-active substances (adjuvants, wetting agents, adhesives, dispersants or emulsifiers) are the alkali, alkaline earth, ammonium salts of aromatic sulfonic acids, eg. Of lignin types, phenol, naphthalene and dibutylnaphthalenesulfonic acid, as well as fatty acids, alkyl and alkylaryl sulfonates, alkyl, lauryl ether and fatty alcohol sulfates, as well as salts of sulfated hexa-, hepta and octadecanols and of fatty alcohol glycol ethers, condensation products of sulfonated naphthalene and its derivatives with formaldehyde, condensation products of naphthalene or of naphthalenesulfonic acids with phenol and formaldehyde, polyoxyethylene octylphenol ethers, ethoxylated isooctyl, octyl or nonylphenol, alkylphenyl, tributylphenyl polyglycol ethers, alkylarylpolyether alcohols, isotridecylalcohol, fatty alcohol-ethylene oxide condensates, ethoxylated castor oil, polyoxyethylene or polyoxypropylene alkyl ethers, lauryl alcohol polyglycol ether acetate, sorbitol esters, lignin-sulphite liquors and proteins, denatured proteins, polysaccharides ( eg methylcellulose), hydrophobically modified starches, polyvinyl alcohol, polycarboxylates, polyalkoxylates, polyvinylamine, polyethyleneimine, polyvinylpyrrolidone and copolymers thereof.

Suitable surfactants are, in particular, anionic, cationic, nonionic and amphoteric surfactants, block polymers and polyelectrolytes. Suitable anionic surfactants are alkali metal, alkaline earth metal or ammonium salts of sulfonates, sulfates, phosphates or carboxylates. Examples of sulfonates are alkylarylsulfonates, diphenylsulfonates, alpha-olefinsulfonates, sulfonates of fatty acids and oils, sulfonates of ethoxylated alkylphenols, sulfonates of condensed naphthalene, sulfonates of dodecyl and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters.

Examples of carboxylates are alkyl carboxylates and carboxylated alcohol or alkyl phenol ethoxylates.

Suitable nonionic surfactants are alkoxylates, N-alkylated fatty acid amides, amine oxides, esters or sugar-based surfactants. Examples of alkoxylates are compounds such as alcohols, alkylphenols, amines, amides, arylphenols, fatty acids or fatty acid esters which have been alkoxylated. For the alkoxylation ethylene oxide and / or propylene oxide can be used, preferably ethylene oxide. Examples of N-alkylated fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkyl polyglucosides. Suitable cationic surfactants are quaternary surfactants, for example quaternary ammonium compounds having one or two hydrophobic

Groups, or salts of long-chain primary amines. Suitable amphoteric surfactants are alkyl betaines and imidazolines. Suitable block polymers are block polymers of A-B or A-B-A type comprising blocks of polyethylene oxide and polypropylene oxide or of the A-B-C type comprising alkanol, polyethylene oxide and polypropylene oxide. Suitable polyelectrolytes are polyacids or polybases. Examples of polyacids are alkali metal salts of polyacrylic acid. Examples of polybases are polyvinylamines or polyethyleneamines.

The composition of the invention may comprise various amounts of surfactants and surfactants. It may comprise from 0.1 to 40% by weight, preferably from 1 to 30 and in particular from 2 to 20% by weight, of total amount of surfactants and surfactants, based on the total amount of the composition.

Examples of thickeners (i.e. compounds which impart a modified flow behavior to the composition, i.e. high-level viscosity and low viscosity in the agitated state) are polysaccharides and organic and inorganic layer minerals such as xanthan gum. Examples of suitable antifreeze agents are ethylene glycol, propylene glycol, urea and glycerin.

Examples of defoamers are silicone emulsions, long-chain alcohols, fatty acids, salts of fatty acids, organofluorine compounds and mixtures thereof.

Examples of adhesives are polyvinylpyrrolidone, polyvinyl acetate, polyvinyl alcohol and cellulose ethers.

In a further preferred embodiment, said oil-based agronomical compositions further comprise polysorbate, preferably polysorbate 60, more preferably as an emulsion.

In another further preferred embodiment, said oil-based agronomical composition further comprises vegetal oils, preferably methylated seed oils and / or terpenes. In another further preferred embodiment, said oil-based agronomical composition further comprises compounds produced by plant secondary metabolism. In particular the composition may comprise terpenoids, more preferably at least one selected from the list of : thymol, menthol, eugenol, geraniol, cinnamaldehyde, phenylpropanol, limonene, linalool.

Oil-based products do not require antimicrobial preservatives due to a lack of aqueous medium. 1,2-alkanediols, particularly 1,2-octanediol however provides improved miscibility and stability on top of improving wetting, spreading and penetration of the oil-based products, improving their uptake by plants.

More preferably, said composition further comprises glycerol.

The present invention will be now described in more details, referring to examples.

### EXAMPLES AND/ OR DESCRIPTION OF FIGURES

### Example 1-2 : Wetting and spreading ability

The wetting and spreading ability for 1,2-alkanediols was investigated on leaves of Fat hen (Chenopodium album L.). The test was done by applying a 1µl droplet of respectively 1,2-pentanediol and 1,2-octanediol at 1% concentration in water on the adaxial side of the leaf fragment. Due to the low solubility of 1,2-octane diol, a small amount of emulsifier, more specific polyethylene glycol sorbitan monostearate, was added to obtain a homogeneous emulsified, dilutable product.

The assessment was done using visible light and showed an extremely fast wetting and spreading pattern for the solution containing 1,2-octanediol when compared to the solution containing 1,2-pentanediol and to a market reference; an esterified seed oil which was applied at 0.5%. The droplet containing 1,2-octane diol was spreading right after deposition on the leaf surface and was showing immediate absorption of the droplet. Comparatively 1,2-pentanediol showed poorer wetting and less spreading on this specific leaf surface.

### Examples 3-4 : Spreading ability of 1,2-octanediol

The distribution characteristic using 1,2-octanediol was investigated on a difficult to wet leaf cuticle, in this case a rapeseed leaf, and was visualized by adding a fluorescent dye. The spreading was compared to water as a reference and to a trisiloxane based wetting/spreading agent, known in the market for its strong spreading characteristics. The treatment was done by using a track sprayer with a turbo twinjet nozzle at a rate corresponding to 200 l/ha. After several hours of drying time at room temperature an evaluation was done of the leaf fragments using UV-A light. 1,2-octanediol and the commercial trisiloxane based surfactant were utilized in a concentration of 0.5 wt.%. The experiment as well as results are shown in table 1.

**Table 1: Summary of observations under UV-A light after spraying of respectively: water, trisiloxane based wetting/spreading agent and 1,2-octanediol.**

| Ex. | Composition | Spreading | Wettability |
|---|---|---|---|
| Reference | water | Very small impacts without spreading | Water drops running off |
| Comparative example 3 | 0.5 wt.% trisiloxane based surfactant | Small impacts with moderate spreading | Heterogeneous droplet distribution |
| Example 4 | 0.5 wt.% 1,2-octanediol | Undefined impacts with high spreading | Droplets visible after impact, spreading rapidly forming a wet film before complete drying |

### Examples 5-7 : Penetration enhancing ability of 1,2-alkanediols

Studies were conducted to quantify the rate of penetration for 1,2-alkanediols into leaves of Fat hen (Chenopodium album L.). The method involved the use of a dye that fluoresces only when present inside the leaf cells, being indicative of the rate of penetration of the adjuvant into the leaves.

A 1µl droplet of respectively 1 wt.% 1,2-pentanediol (Ex. 5) and 1,2-octanediol (Ex. 6) in water containing fluorescent dye were deposited on the adaxial side of the leaf fragment and compared to a market reference (Comparative ex. 7). Due to the low solubility of 1,2-octanediol into water, a small amount of emulsifier was added to each composition.

An extremely fast wetting and spreading pattern was seen for the solution containing 1,2-octanediol compared to the solution containing 1,2-pentanediol and to a market reference. Due to the fast spreading of the 1,2-octane diol composition on the leaf, the intensity of the fluorescent dye seemed less for the 1,2-octanediol than for the reference sample and required application of a barrier ring to prevent the spreading, enabling a better visualization of the penetration effect when using 1,2-octanediol.

When applying the reference sample, the green fluorescence became visible 3,5 minutes after deposition of the drop which is indicative for a rapid penetration of the dye. Some spreading appeared near the end of the test. The sample containing 1,2-pentanediol was showing a low adherence on the leaf and limited spreading and penetration was observed in this test. Application of the sample containing 1,2-octanediol resulted in a strong spreading and when applied with barrier ring showing the strong penetration into the leaf.

### Examples 8-13

Further to the improved wetting spreading and penetration ability it is believed that the addition of the adjuvant as tank mix additive or as component of the concentrated formulation (in-can) could show an improved efficacy of the agrochemical active substances when applied to the plants. Example 8 of such improved efficacy describes the effect of adding 1,2-octanediol to an agrochemical formulation containing an herbicide which was sprayed onto crops.

The adjuvant was added to the tank in combination with a wettable granule (WG) containing 25 wt.% of a sulphonylurea herbicide and 50 wt.% of a benzoic acid herbicide (dose 150g/Ha) and was compared to a spray solution containing only water, a solution containing the WG herbicide and a solution containing the WG herbicide with a reference adjuvant, which is commercially available and is providing spreading and penetration of the herbicide. The test was done on cabbage plants by using a hand sprayer. The spray rate for each of these tests was 250L/ha. The dosage of active ingredients and adjuvants is listed below.
- Comparative example 8 consists of water (reference composition).
- Comparative example 9 consists of an herbicide composition absent of adjuvant. The application rate of the herbicide was 150 g/ha.
- Comparative example 10 consists of the herbicide composition of comparative example 9, with the further addition of a commercial trisiloxane-based adjuvant. The application rate of the adjuvant was 1L/ha.
- Example 11 consists of the herbicide composition of comparative example 9, with the further addition of 1,2-pentanediol. The application rate of 1,2-pentanediol was 1L/ha.
- Example 12 consists of the herbicide composition of comparative example 9, with the further addition of 1,2-octanediol. The application rate of 1,2-octanediol was 0.5 L/ha.
- Example 13 consists of the herbicide composition of comparative example 9, with the further addition of 1,2-octanediol. The application rate of 1,2-octanediol was 1 L/ha.

The assessment was done by digital image analysis allowing to determine the plant dimensions, the living ground cover (LGC), and the portion of the plant that was affected by the treatment by using colour analysis. Measurements were done respectively 3,7 and 10 days after treatment (DAT). The results are shown in table 2.

The results showed a regular growth for the untreated cabbage plants, while all the plants treated with the herbicide composition were reduced in growth. The effect of the adjuvants became significant 7 days after treatment, showing an improvement in effectiveness when applying 1,2-alkanediols, specifically 1,2-octanediol in combination with the herbicide WG.

**Table 2 : results of the LGC analysis at 3,7 and 10days after treatment and % reduction after resp. 7 and 10 days.**

| | **LGC (cm²) 3 DAT** | **LGC (cm²) 7 DAT** | **LGC (cm²) 10 DAT** | **% reduction 7 DAT** | **% reduction 10 DAT** |
|---|---|---|---|---|---|
| **C. ex. 8** | 59.5 | 98.7 | 156.4 | NA | NA |
| **C. ex. 9** | 53.0 | 42.3 | 36.4 | 20.1 | 31.4 |
| **C. ex. 10** | 48.0 | 37.2 | 34.3 | 22.5 | 28.6 |
| **Ex. 11** | 45.6 | 39.9 | 29.2 | 12.5 | 36.1 |
| **Ex. 12** | 47.8 | 37.8 | 33.5 | 21.1 | 30.0 |
| **Ex. 13** | 49.1 | 34.9 | 27.2 | 29.1 | 44.7 |

## Claims

1. Use of a liquid composition comprising a C5 to C12 1,2-alkanediol as an adjuvant in an agronomical composition, wherein the agricultural composition comprises said C5 to C12 1,2-alkanediols in a concentration of at most 0.95 wt.% and wherein the agronomical composition is applied to plant foliage.

2. Use according to claim 1, wherein said C5 to C12 1,2-alkanediol is used as a penetration enhancer of an agronomically active ingredient.

3. Use according to any of claims claim 1-2, wherein said C5 to C12 1,2-alkanediol is used as a wetting agent.

4. Use according to any of claims 1-3, wherein said C5 to C12 1,2-alkanediol is used as a spreading agent.

5. Use according to any of claims 1-4, wherein said agronomical composition comprises said C5 to C12 1,2-alkanediol in a concentration of at least 0.01 wt.%.

6. Use according to any of claims 1-5, wherein said agronomical composition comprises said C5 to C12 1,2-alkanediol in a concentration of at most 0.8 wt.%.

7. Use according to any of the claims 1-6, wherein said 1,2-alkanediol is 1,2-octanediol.

8. Use according to any of the claims 1-7, wherein the agronomical composition is sprayed onto plant foliage.

9. Use according to any of the claims 1-8, wherein said C5 to C12 1,2-alkanediol is applied in an amount of 0.01 to 10.00 kg/ha, preferably in an amount of 0.05 to 8.00 kg, more preferably in an amount of 0.1 to 5.0 kg/ha.

## Patentansprüche

1. Verwendung einer flüssigen Zusammensetzung, die ein C5- bis C12-1,2-Alkandiol als ein Adjuvans in einer agronomischen Zusammensetzung umfasst, wobei die agronomische Zusammensetzung die C5- bis C12-1,2-Alkandiole in einer Konzentration von höchstens 0,95 Gew.-% umfasst und wobei die agronomische Zusammensetzung auf Pflanzenblattwerk aufgebracht wird.

2. Verwendung nach Anspruch 1, wobei das C5- bis C12-1,2-Alkandiol als ein Penetrationsförderer für einen agronomisch wirksamen Bestandteil verwendet wird.

3. Verwendung nach einem der Ansprüche 1 - 2, wobei das C5- bis C12-1,2-Alkandiol als Benetzungsmittel verwendet wird.

4. Verwendung nach einem der Ansprüche 1 - 3, wobei das C5- bis C12-1,2-Alkandiol als ein Spreitmittel verwendet wird.

5. Verwendung nach einem der Ansprüche 1 - 4, wobei die agronomische Zusammensetzung das C5- bis C12-1,2-Alkandiol in einer Konzentration von mindestens 0,01 Gew.-% umfasst.

6. Verwendung nach einem der Ansprüche 1 - 5, wobei die agronomische Zusammensetzung das C5- bis C12-1,2-Alkandiol in einer Konzentration von höchstens 0,8 Gew.-% umfasst.

7. Verwendung nach einem der Ansprüche 1 - 6, wobei das 1,2-Alkandiol 1,2-Octandiol ist.

8. Verwendung nach einem der Ansprüche 1 - 7, wobei die agronomische Zusammensetzung auf Pflanzenblattwerk gesprüht wird.

9. Verwendung nach einem der Ansprüche 1 - 8, wobei das C5- bis C12 1,2-Alkandiol in einer Menge von 0,01 bis 10,00 kg/ha ausgebracht wird, vorzugsweise in einer Menge von 0,05 bis 8,00 kg, bevorzugter in einer Menge von 0,1 bis 5,0 kg/ha.

## Revendications

1. Utilisation d'une composition liquide comprenant un 1,2-alcanediol en C5 à C12 comme adjuvant dans une composition agronomique, dans laquelle la composition agricole comprend lesdits 1,2-alcanediols en C5 à C12 dans une concentration d'au plus 0,95 % en poids et dans laquelle la composition agronomique est appliquée sur le feuillage des plantes.

2. Utilisation selon la revendication 1, dans laquelle ledit 1,2-alcanediol en C5 à C12 est utilisé comme activateur de pénétration d'un ingrédient agronomiquement actif.

3. Utilisation selon l'une quelconque des revendications 1 - 2, dans laquelle ledit 1,2-alcanediol en C5 à C12 est utilisé comme agent mouillant.

4. Utilisation selon l'une quelconque des revendications 1 - 3, dans laquelle ledit 1,2-alcanediol en C5 à C12 est utilisé comme agent d'étalement.

5. Utilisation selon l'une quelconque des revendications 1 - 4, dans laquelle ladite composition agronomique comprend ledit 1,2-alcanediol en C5 à C12 dans une concentration d'au moins 0,01 % en poids.

6. Utilisation selon l'une quelconque des revendications 1 - 5, dans laquelle ladite composition agronomique comprend ledit 1,2-alcanediol en C5 à C12 dans une concentration d'au plus 0,8 % en poids.

7. Utilisation selon l'une quelconque des revendications 1 - 6, dans laquelle ledit 1,2-alcanediol est le 1,2-octanediol.

8. Utilisation selon l'une quelconque des revendications 1 - 7, dans laquelle la composition agronomique est pulvérisée sur le feuillage des plantes.

9. Utilisation selon l'une quelconque des revendications 1 - 8, dans laquelle ledit 1,2-alcanediol en C5 à C12 est appliqué en une quantité de 0,01 à 10,00 kg/ha, de préférence en une quantité de 0,05 à 8,00 kg, plus préférentiellement en une quantité de 0,1 à 5,0 kg/ha.
